# EUROPÄISCHE PATENTSCHRIFT

(11) **EP 1 403 143 B1**
(45) Veröffentlichungstag und Bekanntmachung des Hinweises auf die Patenterteilung: **03.01.2007**
(21) Anmeldenummer: 02102398.1
(22) Anmeldetag: 30.09.2002
(51) Int. Cl.: B60R 16/02

(54) **Verfahren zur Stromversorgung in einem Stromversorgungsnetz mit einem Superkondensator**
Power supply procedur in a power network with a super-capacitor
Procédé d'alimentation en courant dans un réseau d'alimentation en courant avec un super condensateur

(43) Veröffentlichungstag der Anmeldung: 31.03.2004
(73) Patentinhaber: Ford Global Technologies, LLC., Dearborn, MI 48126 (US)
(72) Erfinder: Gaedt, Lutz Peter, 52499, Baesweiler (DE); Spijker, Engbert, 6361, BR Nuth (NL); Kok, Daniel Benjamin, 6343 CA, Klimmen (NL)
(74) Vertreter: Drömer, Hans-Carsten

(56) Entgegenhaltungen:
- EP-A- 0 412 631
- EP-A- 0 865 142
- EP-A- 1 013 506
- DE-C- 19 915 973
- FR-A- 2 751 145

## Beschreibung

Die Erfindung betrifft ein Verfahren zur Spannungsregelung im Stromversorgungsnetz eines Kraftfahrzeuges, welches einen Superkondensator enthält, sowie ein zur Durchführung dieses Verfahrens eingerichtetes Stromversorgungsnetz.

Mit Hilfe neuer Technologien ist die Herstellung von sogenannten Superkondensatoren möglich geworden, die sich von herkömmlichen Kondensatoren durch eine hohe Leistungsdichte von typischerweise 1-3 kWh/kg, eine hohe Zyklusfähigkeit und eine hohe mechanische Robustheit unterscheiden. Dies eröffnet zahlreiche Einsatzmöglichkeiten im Bereich der Kraftfahrzeugtechnik, wobei derartige Superkondensatoren sogar als Kurzzeitspeicher für Elektrofahrzeuge eingesetzt werden können.

Nachteilig an Superkondensatoren ist im Vergleich zu elektrochemischen Energiespeichern ihr verhältnismäßig geringer Energiegehalt, welcher stark von der Ausgangsspannung des Superkondensators abhängt. Bei Betrieb in einem Bereitschaftsmodus ("Stand-by Betrieb") findet zudem durch eine Selbstentladung, durch Verbraucher bei abgeschaltetem Kraftfahrzeugmotor oder durch Superkondensator-Ausgleichsschaltkreise eine langsame Entladung von Superkondensatoren statt. Wenn die Ausgangsspannung unter eine bestimmte Grenze abfällt, können hierdurch die Leistungsfähigkeit und das Verhalten des Superkondensators im Bereitschaftsmodus erheblich beeinträchtigt werden, oder der Kondensator kann ganz ausfallen.

Aus der DE 199 15 973 C1 ist ein gattungsgemäßes erfahren zur Regelung der Bordnetzspannung eines Kraftfahrzeuges bekannt, bei welchem zur Verringerung der Belastung der Fahrzeugbatterie bei Stillstand des Motors eine Spannungsabsenkung vorgenommen wird. Dabei wird z.B. ein Superkondensator als Energiespeicher mit variabler Spannung eingesetzt, dessen Ausgangsspannung U_{c} für unterschiedliche Betriebszustände, nämlich in Abhängigkeit von der Einschaltung zusätzlicher Verbraucher, unterschiedlich ausgewählt wird.

Aufgabe der vorliegenden Erfindung, ist es eine Spannungsregelung im Stromversorgungsnetz eines Kraftfahrzeuges mit einem Super-kondensator bereitzustellen, welche eine hohe Lebensdauer des Superkondensators und eine sichere Funktionalität im Bereitschaftsmodus gewährleistet.

Diese Aufgabe wird durch ein Verfahren mit den Merkmalen des Anspruchs 1 sowie durch ein Stromversorgungsnetz mit den Merkmalen des Anspruchs 7 gelöst.

Vorteilhafte Ausgestaltungen sind in den Unteransprüchen enthalten.

Das erfindungsgemäße Verfahren zur Spannungsregelung im Stromversorgungsnetz eines Kraftfahrzeuges, welches einen Superkondensator enthält, ist dadurch gekennzeichnet, daß die Spannungsregelung sowohl in einem Kurzzeit-Bereitschaftsmodus, in welchem die Spannung des Superkondensators innerhalb eines verhältnismäßig engen Spannungsfensters zwischen einem Minimalwert und einem Maximalwert gehalten wird, als auch in einem Langzeit-Bereitschaftsmodus, in welchem sich der Superkondensator beliebig weit, insbesondere auch vollständig, entladen kann, erfolgt, wobei in dem Kurzzeit-Bereitschaftsmodus der Energievorrat des Superkondensators aufgefrischt wird, wenn die Spannung des Superkondensators unter den Minimalwert gesunken ist, und wobei in dem Langzeit-Bereitschaftsmodus der Energievorrat des Superkondensators in Reaktion auf ein Aktivierungssignal aufgefrischt wird.

Der Bereitschaftsmodus des Superkondensators liegt in der Regel bei Stillstand des Kraftfahrzeuges und abgeschalteter Brennkraftmaschine vor. Durch das gelegentliche Auffrischen des Energievorrates des Superkondensators wird in einem solchen Bereitschaftsmodus ein minimaler Energiegehalt des Superkondensators sichergestellt, so daß dieser bei Bedarf, zum Beispiel bei einem erneuten Anlassen des Kraftfahrzeuges, den angeschlossenen Verbrauchern in ausreichendem Maße elektrische Energie zur Verfügung stellen kann. Verbraucher mit einem stark variierenden, unter Umständen sehr hohen Leistungsbedarf - wie zum Beispiel der Startermotor - können auf diese Weise zu jedem Zeitpunkt ausreichend vom Superkondensator versorgt werden. Die üblicherweise vorhandene Batterie des Stromversorgungsnetzes, deren Lebenszeit durch hohe dynamische Lasten stark verkürzt wird, kann dadurch geschont werden.

Gemäß dem erfindungsgemäßen Verfahren erfolgt das Auffrischen des Energievorrates des Superkondensators im Kurzzeit-Bereitschaftsmodus immer dann, wenn die Spannung des Superkondensators unter einen Minimalwert sinkt. Dieses Vorgehen nutzt die Tatsache aus, daß der Energievorrat in einem Superkondensator gesetzmäßig mit dessen Ausgangsspannung zusammenhängt. Eine verhältnismäßig einfach durchzuführende Überwachung der Spannung reicht daher aus, um die Zeitpunkte festzustellen, zu denen ein Auffrischen des Superkondensators erforderlich ist.

Im Langzeit - Bereitschaftsmodus erfolgt ein Auffrischen des Energievorrates des Superkondensators (nur) in Reaktion auf ein Aktivierungssignal, wobei durch das Auffrischen ein minimaler Energievorrat im Superkondensator hergestellt wird. Die Größe dieses minimalen Energievorrates ist vorzugsweise dieselbe wie beim Kurzzeit-Bereitschaftsmodus. Anders als bei Letzterem besteht das Ziel jedoch nicht darin, den minimalen Energievorrat durchgehend aufrecht zu erhalten, sondern die im Superkondensator gespeicherte Energie kann vor dem Aktivierungssignal deutlich geringer, gegebenenfalls sogar Null sein. Der Langzeit-Bereitschaftsmodus ist daher insbesondere dazu geeignet, bei einem länger andauernden Stillstand des Kraftfahrzeuges eine hohe Lebensdauer des Superkondensators, welche mit dessen Entladung steigt, sicherzustellen und gleichzeitig eine schnelle Inbetriebnahme des Kraftfahrzeuges zu gewährleisten.

Gemäß einer bevorzugten Ausgestaltung des vorstehend erläuterten Verfahrens kann das Aktivierungssignal zeitlich periodisch, d.h. jeweils nach einer fest vorgegebenen Zeitdauer, ausgelöst werden. Zusätzlich oder alternativ kann das Aktivierungssignal auch nach Detektion eines vorgegebenen Ereignisses ausgelöst werden. Ein solches Ereignis kann insbesondere das Öffnen einer Tür des Kraftfahrzeuges sein, welches in der Regel ein Anzeichen für eine bevorstehende Inbetriebnahme des Kraftfahrzeuges ist. Ferner kann das Aktivierungssignal z. B. auch durch das Öffnen eines Garagentores oder das Einstecken des Zündschlüssels in das Zündschloss ausgelöst werden. Mit Hilfe der genannten Signale ist es möglich, auch bei einer längeren Auszeit des Kraftfahrzeuges eine verhältnismäßig schnelle erneute Inbetriebnahme unter Rückgriff auf den Superkondensator zu ermöglichen.

Entsprechend einer bevorzugten Ausgestaltung des Verfahrens wird ein Auffrisch-Vorgang des Energievorrates des Superkondensators im Kurzzeit-Bereitschaftsmodus und/oder im Langzeit-Bereitschaftsmodus beendet, wenn die Spannung des Superkondensators einen vorgegebenen Maximalwert überschreitet. Dieser Maximalwert wird in Abhängigkeit vom Typ des Superkondensators vorzugsweise derart festgelegt, daß der damit verbundene Energiegehalt des Superkondensators einerseits für die gewünschten Funktionen des Kraftfahrzeuges ausreichend ist und daß dieser andererseits unterhalb der maximal erlaubten Spannung für den Superkondensator liegt, um dessen Lebensdauer nicht zu sehr zu verkürzen. Der vorgegebene Maximalwert stellt somit einen Kompromiss zwischen Funktionsbereitschaft des Kraftfahrzeuges und Schonung des Superkondensators dar.

Das Stromversorgungsnetz des Kraftfahrzeuges enthält typischerweise noch eine (wiederaufladbare) Batterie, in welcher eine größere Energiemenge für einen längeren Zeitraum gespeichert werden kann. Bei einem solchen Stromversorgungsnetz erfolgt das Auffrischen des Energievorrates des Superkondensators vorzugsweise durch einen Energietransfer von der Batterie zum Superkondensator.

Weiterhin kann zu Beginn des Kurzzeit-Bereitschaftsmodus und/oder des Langzeit-Bereitschaftsmodus der Superkondensator bis zu einer vorgegebenen Entlädespannung entladen werden, wobei die Entladespannung vorzugsweise denselben Wert wie die oben bereits erwähnte Maximalspannung der Auffrischvorgänge haben kann. Das Entladen des Superkondensators dient dazu, durch einen Spannungsabbau die Lebensdauer des Kondensators zu erhöhen. Die dem Superkondensator entnommene Energie wird dabei vorteilhafterweise in eine Batterie des Stromversorgungsnetzes übertragen, so daß diese nicht verloren geht.

Gemäß einer optionalen Variante des Verfahrens geht der Kurzzeit-Bereitschaftsmodus eine vorgegebene Zeitdauer nach seinem Beginn in den Langzeit-Bereitschaftsmodus über. Die genannte Zeitdauer kann dabei je nach den zugrunde gelegten Zielvorgaben in einem weiten Bereich von typischerweise zwischen einer Minute und zwei Monaten festgelegt werden. Besonders bevorzugt ist es, die Zeitdauer des Kurzzeit-Bereitschaftsmodus auf ca. 24 Stunden festzulegen, da viele Benutzungshandlungen eines Kraftfahrzeuges im Tagesrhythmus erfolgen. Wenn daher nach Ablauf von 24 Stunden keine erneute Inbetriebnahme des Kraftfahrzeuges erfolgt ist, ist ein länger fortgesetzter Stillstand des Kraftfahrzeuges wahrscheinlich, so daß zur besseren Schonung des Superkondensators der Langzeit-Bereitschaftsmodus bevorzugt wird.

Die Erfindung betrifft ferner ein Stromversorgungsnetz für ein Kraftfahrzeug mit einem Superkondensator, welches durch eine mit dem Superkondensator gekoppelte Kontrolleinheit gekennzeichnet ist, die zur Durchführung eines Verfahrens der vorstehend erläuterten Art eingerichtet ist. D.h., daß die Kontrolleinheit insbesondere dahingehend ausgebildet ist, in einem Kurzzeit-Bereitschaftsmodus einen minimalen Energievorrat in dem Superkondensator aufrecht zu erhalten. Dies kann insbesondere durch Überwachung der Spannung des Superkondensators geschehen, wobei Energie aus einer Batterie in den Superkondensator übertragen wird, wenn dessen Spannung einen Minimalwert unterschreitet. Weiterhin kann die Kontrolleinheit zur Realisierung eines Langzeit-Bereitschaftsmodus eingerichtet sein, in welchem nur auf ein Aktivierungssignal hin ein Auffrischen des Energievorrates im Superkondensator erfolgt. Der Auffrischvorgang endet dabei vorzugsweise bei einem Maximalwert der Spannung des Superkondensators, um dessen Lebenserwartung nicht zu beeinträchtigen.

In dem beschriebenen Stromversorgungsnetz sind vorzugsweise Verbraucher mit einem hohen dynamischen Lastaufkommen an den Superkondensator angeschlossen. Im Gegensatz zu einer Batterie ist der Superkondensator nämlich hervorragend zur Bewältigung solcher Lasten geeignet. Beispiele für derartige Verbraucher sind der Startermotor, ein elektronisch unterstütztes Lenksystem (EPAS: Electric Power Assisted Steering), elektrisch unterstützte Bremsen und ein elektrisch unterstützter Turbolader.

Im Folgenden wird die Erfindung anhand der Figuren beispielhaft näher erläutert.
Es zeigen:
- Fig. 1: die Komponenten eines erfindungsgemäßen Stromversorgungsnetzes mit einem Superkondensator;
- Fig. 2: den Spannungsverlauf am Superkondensator während eines erfindungsgemäßen Kurzzeit- und eines Langzeit-Bereitschaftsmodus, und
- Fig. 3: die Lebenserwartung eines Superkondensators in Abhängigkeit von dessen Spannung und seiner Temperatur.

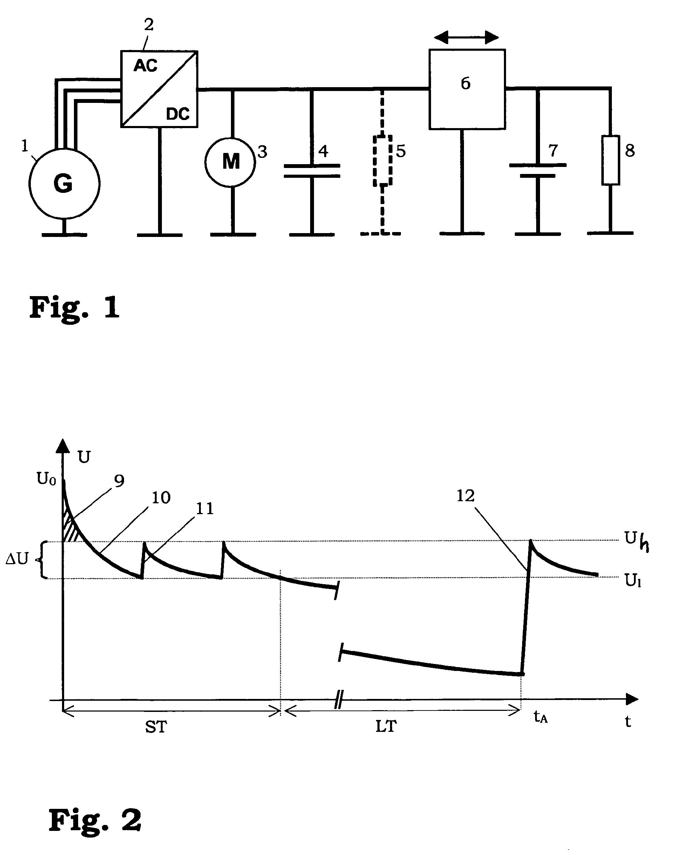

In Figur 1 ist das Stromversorgungsnetz eines Kraftfahrzeuges schematisch dargestellt. Die elektrische Energie für dieses Stromversorgungsnetz wird von einem Generator 1 ("Lichtmaschine") in Form von Wechselspannung bereitgestellt, welche in einem Gleichrichter 2 in Gleichspannung umgewandelt wird. Diese Gleichspannung wird einem Startermotor 3 zum Anlassen der Brennkraftmaschine (nicht dargestellt) des Kraftfahrzeuges, einem Superkondensator 4, ggf. weiteren Verbrauchern 5, und einer Kontrolleinheit 6 mit einer bidirektionalen Leistungselektronik zugeführt. Die Leistungselektronik kann dabei ein Gleichspannungswandler (DC/DC-Konverter), eine Pulsweitenmodulation, ein Relais oder dergleichen sein. Über die Kontrolleinheit 6 wird die Gleichspannung an eine elektrochemische wiederaufladbare Batterie 7 sowie an weitere Verbraucher 8 weitergeleitet.

Die an den Superkondensator 4 angeschlossenen Verbraucher 5 sind vorzugsweise solche mit einer hohen Dynamik und einer hohen Maximallast (d.h. einem großen Verhältnis von Spitzenleistung zu Durchschnittsleistung). Beispiele hierfür sind neben dem Startermotor 3 ein elektrisch unterstütztes Lenksystem, elektrische Bremsen oder ein elektrisch unterstützter Turbolader. Die Batterie 7 versorgt dagegen vorzugsweise Verbraucher 8 mit einer geringeren Dynamik und Leistungsaufnahme.

Die beschriebene Verteilung der Verbraucher 3, 5 und 8 auf den Superkondensator 4 beziehungsweise die Batterie 7 wirkt sich vorteilhaft auf die Lebenserwartung der Batterie 7 aus. Die meisten elektrochemischen Energiespeichereinrichtungen haben nämlich eine begrenzte Lebensdauer, die durch den Energiedurchsatz bestimmt wird. Dieser maximale Energiedurchsatz hängt nicht nur hochgradig von der Amplitude des Ladungsstromes ab, sondern führt auch dazu, daß eine Ladungsübertragung durch eine solche Vorrichtung einen gewissen "Preis" hat. Es ist daher vorteilhaft, die Spitzenladungs- und Entladungsströme und den Energiedurchsatz der Batterie 7 zu minimieren, um die Kosten des Systems (kleinere Batterie) zu reduzieren und die Lebensdauer dieser Vorrichtung zu maximieren. Dies geschieht durch die Optimierung und Verwendung der Batterie 7 für Lasten geringer Leistungsaufnahme während langer Zeitdauern.

Der Superkondensator 4 hat dagegen eine sehr lange Lebensdauer, eine hohe Zyklusfähigkeit und geringe Kosten durch Herstellung aus kostengünstigen Materialien. Aus diesem Grunde hat der Superkondensator 4 einen sehr viel geringeren "Preis" pro Einheit durchgesetzter Energie, so daß er vorteilhaft für dynamische Verbraucher mit hoher Lastaufnahme eingesetzt wird.

Das in Figur 1 dargestellte Stromversorgungsnetz ist jedoch nicht nur hinsichtlich seiner Architektur optimiert, sondern die Kontrolleinheit 6 ist darüber hinaus für einen optimalen Betrieb im Bereitschaftsmodus eingerichtet. Ein Bereitschaftsmodus liegt insbesondere dann vor, wenn die Brennkraftmaschine des Kraftfahrzeuges abgestellt ist und der Generator 1 daher keine Energie erzeugt. In diesem Fall muss sichergestellt werden, daß bei einem erneuten Starten des Kraftfahrzeuges ausreichend elektrische Energie für die dann in Aktion tretenden Verbraucher wie vor allem den Startermotor 3 zur Verfügung steht. Die Kontrolleinheit 6 gewährleistet dies durch ein Verfahren, bei welchem Energie zwischen dem Superkondensator 4 und der Batterie 7 nach Bedarf verschoben wird, wie nachfolgend anhand von Figur 2 erläutert wird.

Figur 2 zeigt die Ausgangsspannung U des Superkondensators 4 im Verlauf über der Zeit t nach dem Ausschalten der Brennkraftmaschine. Die zunächst auf einem hohen Spannungsniveau U₀ liegende Spannung wird durch eine Selbstentladung, durch bei abgeschaltetem Motor noch anliegende Lasten, durch Superkondensator-Ausgleichschaltkreise od. dgl. langsam entlang der Kurve 10 abgebaut. Wenn die Spannung dabei einen Minimalwert Uₗ erreicht, wird diese von der Kontrolleinheit 6 entlang der Kurve 11 durch einen Energietransfer von der Batterie 7 zum Superkondensator 4 wieder bis zu einem Maximalwert Uₕ erhöht. Dieser Vorgang wiederholt sich im Kurzzeit-Bereitschaftsmodus ST so oft wie erforderlich. Die Spannung des Superkondensators wird auf diese Weise von der Kontrolleinheit 6 im Kurzzeit-Bereitschaftsmodus ST innerhalb eines verhältnismäßig engen Spannungsfensters ΔU zwischen Uₗ und Uₕ gehalten.

Um die beschriebene Funktion ausführen zu können, muss die Kontrolleinheit 6 die Spannung des Superkondensators 4 fortlaufend überwachen. Da die Spannung ein direktes Maß für den Energiegehalt des Superkondensators 4 darstellt, kann durch eine derartige Strategie sichergestellt werden, daß während des Kurzzeit-Bereitschaftsmodus ST ständig ein minimaler Energievorrat im Superkondensator 4 aufrecht erhalten wird. Dies ist jedenfalls so lange der Fall, wie die Batterie 7 ausreichend Energie für das fortgesetzte Auffrischen des Superkondensators 4 enthält.

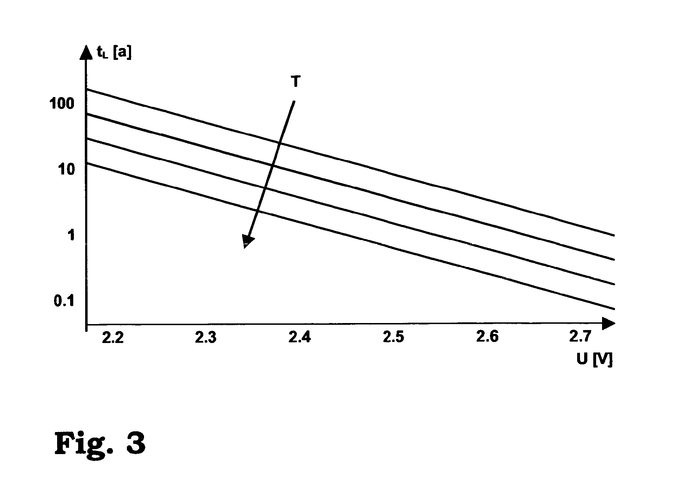

Das Auffrischen der Kondensatorspannung U wird bei dem Maximalwert Uₕ beendet, da die Lebenserwartung des Kondensators 4 mit zunehmender Kondensatorspannung sinkt. Der entsprechende Zusammenhang ist in Figur 3 in einem Diagramm dargestellt, welches auf der horizontalen Achse die Kondensatorspannung U in Volt und auf der vertikalen Achse die zugehörige Lebenserwartung t_{L} in Jahren zeigt. Ferner sind verschiedene, parallel zueinander verlaufende Kurven dargestellt, die das Abnehmen der Lebenserwartung mit zunehmender Temperatur T des Superkondensators widerspiegeln. Durch das Halten der Spannung des Superkondensators 4 in dem beschriebenen Spannungsfenster ΔU wird daher gewährleistet, daß der Kondensator geschont wird und gleichzeitig das Kraftfahrzeug im Kurzzeit-Bereitschaftsmodus ST jederzeit mit Hilfe von Energie aus dem Superkondensator 4 wieder gestartet werden kann.

Wird das Kraftfahrzeug allerdings für eine längere Zeitdauer nicht neu gestartet, so geht der Kurzzeit-Bereitschaftsmodus ST in einen Langzeit-Bereitschaftsmodus LT über. Die genannte Zeitdauer kann dabei im Bereich von einigen Minuten bis einigen Monaten liegen.

Wie aus Figur 2 zu erkennen ist, kann sich im Langzeit-Bereitschaftsmodus LT der Superkondensator 4 beliebig weit, insbesondere auch vollständig entladen. Ein Auffrischen der Kondensatorspannung U bis zur Maximalspannung Uₕ erfolgt nur, wenn ein entsprechendes Aktivierungssignal zu einem Zeitpunkt t_{A} an die Kontrolleinheit 6 gegeben wird. Das Aktivierungssignal kann im einfachsten Falle von einem Taktgenerator in regelmäßigen Zeitabständen erzeugt werden. Vorzugsweise handelt es sich jedoch um ein externes Aktivierungssignal, das vom Benutzer fernausgelöst wird oder das zum Beispiel bei einer Tätigkeit wie dem Öffnen der Türen erzeugt wird. Ein Öffnen der Türen ist dabei ein Indiz dafür, daß eine erneute Inbetriebnahme des Kraftfahrzeuges bevorsteht. Durch das Auffrischen der Ladung des Superkondensators 4 ist das Stromversorgungsnetz in diesen Fällen optimal auf das erneute Starten vorbereitet.

Die Kontrolleinheit 6 kann weiterhin dahingehend ausgebildet sein, zu Beginn eines Bereitschaftsmodus überschüssige Energie des Superkondensators 4 in die Batterie 7 zu übertragen. Dies ist bei Figur 2 für die schraffiert dargestellte Energie 9 der Fall, welche durch den Abbau der ursprünglichen Kondensatorspannung U₀ auf den Maximalwert Uₕ anfällt. In ähnlicher Weise kann zu Beginn des Langzeit-Bereitschaftsmodus LT ein teilweiser oder vollständiger Energieübertrag aus dem Superkondensator 4 zur Batterie 7 erfolgen (nicht dargestellt). Diese Energie des Superkondensators kann zum Laden der Batterie 7 über eine lange Zeitdauer bei geringen Strömen verwendet werden, um einen hohen SOC (State of Charge: Ladezustand) der Batterie zu erreichen (Bleisäure-Batterien benötigen einen Ladevorgang mit geringen Strömen für 6 bis 24 h je nach SOC, um ein 100% SOC zu erreichen).

Weiterhin kann das in der Kontrolleinheit 6 implementierte Regelungsverfahren einen Algorithmus enthalten, welcher Verbraucher, die auch nach Abschalten der Brennkraftmaschine Strom verbrauchen, während einer anfänglichen Phase aus dem Superkondensator 4 und später (wenn eine minimale Spannung des Superkondensators 4 unterschritten wird) aus der Batterie 7 versorgt.

## Patentansprüche

1. Verfahren zur Spannungsregelung im Stromversorgungsnetz eines Kraftfahrzeugs, welches einen Superkondensator (4) enthält,
**dadurch gekennzeichnet, daß**
die Spannungsregelung sowohl in einem Kurzzeit-Bereitschaftsmodus (ST), in welchem die Spannung des Superkondensators innerhalb eines verhältnismäßig engen Spannungsfensters (ΔU) zwischen einem Minimalwert (Uₗ) und einem Maximalwert (Uₕ) gehalten wird, als auch in einem Langzeit-Bereitschaftsmodus (LT), in welchem sich der Superkondensator beliebig weit, insbesondere auch vollständig, entladen kann, erfolgt;
wobei in dem Kurzzeit-Bereitschaftsmodus (ST) der Energievorrat des Superkondensators (4) aufgefrischt wird, wenn die Spannung des Superkondensators unter den Minimalwert (Uₗ) gesunken ist; und
wobei in dem Langzeit-Bereitschaftsmodus (LT) der Energievorrat des Superkondensators (4) in Reaktion auf ein Aktivierungssignal aufgefrischt wird.

2. Verfahren nach Anspruch 1,
**dadurch gekennzeichnet, daß**
das Aktivierungssignal zeitlich periodisch und/oder nach Detektion eines vorgegebenen Ereignisses, insbesondere des Öffnens einer Tür des Kraftfahrzeuges, ausgelöst wird.

3. Verfahren nach Anspruch 1 oder 2,
**dadurch gekennzeichnet, daß**
ein Auffrisch-Vorgang des Energievorrats im Kurzzeit-Bereitschaftsmodus (ST) und/oder im Langzeit-Bereitschaftsmodus (LT) beendet wird, wenn die Spannung des Superkondensators (4) einen vorgegebenen Maximalwert (Uₕ) überschreitet.

4. Verfahren nach mindestens einem der Ansprüche 1 bis 3,
**dadurch gekennzeichnet, daß**
der Energievorrat des Superkondensators (4) durch Energietransfer aus einer Batterie (7) des Stromversorgungsnetzes aufgefrischt wird.

5. Verfahren nach mindestens einem der Ansprüche 1 bis 4,
**dadurch gekennzeichnet, daß**
zu Beginn des Kurzzeit-Bereitschaftsmodus (ST) und/oder des Langzeit-Bereitschaftsmodus (LT) der Superkondensator (4) bis zu einer vorgegebenen Entladespannung (Uₕ) entladen wird, wobei die dabei entnommene Energie vorzugsweise in eine Batterie (7) des Stromversorgungsnetzes transferiert wird.

6. Verfahren nach mindestens einem der Ansprüche 1 bis 5,
**dadurch gekennzeichnet, daß**
der Kurzzeit-Bereitschaftsmodus (ST) vorzugsweise nach einem Zeitraum von einer Minute bis zwei Monaten, besonders bevorzugt nach ca. 24 Stunden, in den Langzeit-Bereitschaftsmodus (LT) übergeht.

7. Stromversorgungsnetz für ein Kraftfahrzeug mit einem Superkondensator (4), **gekennzeichnet durch** eine mit dem Superkondensator gekoppelte Kontrolleinheit (6), welche dahingehend ausgebildet ist, ein Verfahren nach mindestens einem der Ansprüche 1 bis 6 auszuführen.

8. Stromversorgungsnetz nach Anspruch 7,
**dadurch gekennzeichnet, daß**
an den Superkondensator (4) Verbraucher (3, 5) mit einem hohen dynamischen Lastaufkommen angeschlossen sind.

## Claims

1. Method for voltage regulation in an electrical power supply system for a motor vehicle, which contains a supercapacitor (4),
**characterized in that**
the voltage regulation is carried out both in a short-term standby mode (ST), in which the voltage across the supercapacitor is capped within a relatively narrow voltage window (ΔU) between a minimum value (Uₗ) and a maximum value (Uₕ), and in a long-term standby mode (LT), in which the supercapacitor can be discharged indefinitely, and in particular even completely;
with, in the short-term standby mode (ST), the energy supply for the supercapacitor (4) being refreshed when the voltage across the supercapacitor has fallen below the minimum value (Uₗ); and
with, in the long-term standby mode (LT), the energy supply for the supercapacitor (4) being refreshed as a reaction to an activation signal.

2. Method according to Claim 1,
**characterized in that**
the activation signal is triggered periodically in time and/or after detection of a predetermined event, in particular the opening of a door of the motor vehicle.

3. Method according to Claim 1 or 2,
**characterized in that**
a refreshing process for the energy supply in the short-term standby mode (ST) and/or in the long-term standby mode (LT) is ended when the voltage across the supercapacitor (4) exceeds a predetermined maximum value (Uₕ).

4. Method according to at least one of Claims 1 to 3,
**characterized in that**
the energy supply for the supercapacitor (4) is refreshed by transferring energy from a battery (7) in the electrical power supply system.

5. Method according to at least one of Claims 1 to 4,
**characterized in that**
at the start of the short-term standby mode (ST) and/or of the long-term standby mode (LT), the supercapacitor (4) is discharged down to a predetermined discharge voltage (Uₕ), with the energy which is drawn in the process preferably being transferred to a battery (7) in the electrical power supply system.

6. Method according to at least one of Claims 1 to 5,
**characterized in that**
the short-term standby mode (ST) preferably changes to the long-term standby mode (LT) after a time period of one minute to two months, particularly preferably after about 24 hours.

7. Electrical power supply system for a motor vehicle having a supercapacitor (4), distinguished by a monitoring unit, (6) which is coupled to the supercapacitor and is designed to carry out a method according to at least one of Claims 1 to 6.

8. Electrical power supply system according to Claim 7,
**characterized in that**
loads (3, 5) having a high dynamic load component are connected to the supercapacitor (4).

## Revendications

1. Procédé de régulation de la tension dans un réseau d'alimentation électrique d'un véhicule automobile qui contient un supercondensateur (4),
**caractérisé en ce que** la régulation de la tension s'effectue à la fois dans un mode de réserve à court terme (ST) dans lequel la tension du supercondensateur est maintenue au sein d'un créneau de tension (ΔU) relativement étroit entre une valeur minimale (Uₗ) et une valeur maximale (Uₕ) et dans un mode de réserve à long terme (LT) dans lequel le supercondensateur peut se décharger à un niveau quelconque, notamment aussi complètement ;
la réserve d'énergie du supercondensateur (4) en mode de réserve à court terme (ST) étant rafraîchie lorsque la tension du supercondensateur a chuté en dessous de la valeur minimale (Uₗ) ; et
la réserve d'énergie du supercondensateur (4) en mode de réserve à long terme (LT) étant rafraîchie en réaction à un signal d'activation.

2. Procédé selon la revendication 1, **caractérisé en ce que** le signal d'activation est déclenché périodiquement dans le temps et/ou après la détection d'un événement prédéfini, notamment l'ouverture d'une porte du véhicule automobile.

3. Procédé selon la revendication 1 ou 2, **caractérisé en ce que** le processus de rafraîchissement de la réserve d'énergie en mode de réserve à court terme (ST) et/ou en mode de réserve à long terme (LT) est arrêté lorsque la tension du supercondensateur (4) dépasse une valeur maximale (Uₕ) prédéfinie.

4. Procédé selon l'une des revendications 1 à 3, **caractérisé en ce que** la réserve d'énergie du supercondensateur (4) est rafraîchie par transfert d'énergie depuis une batterie (7) du réseau d'alimentation électrique.

5. Procédé selon l'une des revendications 1 à 4, **caractérisé en ce qu'**au début du mode de réserve à court terme (ST) et/ou du mode de réserve à long terme (LT), le supercondensateur (4) est déchargé jusqu'à une tension de décharge (Uₕ) prédéfinie, l'énergie prélevée ici étant de préférence transférée dans une batterie (7) du réseau d'alimentation électrique.

6. Procédé selon l'une des revendications 1 à 5, **caractérisé en ce que** le mode de réserve à court terme (ST) passe au mode de réserve à long terme (LT) de préférence après une période de une minute à deux mois, notamment préférablement après environ 24 heures.

7. Réseau d'alimentation électrique pour un véhicule automobile comprenant un supercondensateur (4), **caractérisé par** une unité de contrôle (6) couplée avec le condensateur qui est configurée de manière à mettre en oeuvre un procédé selon au moins l'une des revendications 1 à 6.

8. Réseau d'alimentation électrique selon la revendication 7, **caractérisé en ce que** des charges (3, 5) ayant des demandes de charge dynamique élevées sont raccordées au supercondensateur (4).
